# EUROPEAN PATENT SPECIFICATION

(11) **EP 0 414 573 B1**
(45) Date of publication and mention of the grant of the patent: **23.02.1994**
(21) Application number: 90309348.2
(22) Date of filing: 24.08.1990
(51) Int. Cl.: B01J 23/10, B01J 23/56, C01B 3/40

(54) **Steam reforming catalyst for hydrocarbon and method for manufacturing the same**
Katalysator für die Dampfreformierung von Kohlenwasserstoffen und Verfahren für seine Herstellung
Catalyseur de reformage à la vapeur d'hydrocarbures et procédé pour le fabriquer

(30) Priority: 25.08.1989 JP 219208/89
(43) Date of publication of application: 27.02.1991
(73) Proprietor: Tonen Corporation, Tokyo 100 (JP); PETROLEUM ENERGY CENTER FOUNDATION, Tokyo 106 (JP)
(72) Inventor: Saiai, Akira, c/o Tonen Corporation, Ooi-machi, Iruma-gun, Saitama 354 (JP); Yokoyama, Yasuharu, c/o Tonen Corporation, Ooi-machi, Iruma-gun, Saitama 354 (JP); Sakurada, Satoshi, c/o Tonen Corporation, Ooi-machi, Iruma-gun, Saitama 354 (JP); Hashimoto, Takao, c/o Tonen Corporation, Ooi-machi, Iruma-gun, Saitama 354 (JP); Segawa, Tomoko, c/o Tonen Corporation, Ooi-machi, Iruma-gun, Saitama 354 (JP); Ishizaki, Fumiya, c/o Tonen Corporation, Ooi-machi, Iruma-gun, Saitama 354 (JP)
(74) Representative: Bubb, Antony John Allen

(56) References cited:
- EP-A- 0 033 505
- EP-A- 0 310 398
- EP-A- 0 333 037
- EP-A- 0 337 809
- EP-A- 0 406 896
- FR-A- 2 553 406
- FR-A- 2 590 887

## Description

The present invention relates to a reforming catalyst for hydrocarbons, and in particular to an improved steam reforming catalyst for hydrocarbons for use in an oil refinery and for fuel cells, which has longer life through suppression of carbon deposition and by effectively utilizing catalytic components, particularly, noble metal components.

Steam reforming of hydrocarbons is a method of manufacturing gas consisting of hydrogen and carbon oxides by bringing hydrocarbon and steam in contact with catalyst. Typical known steam reforming catalysts are an alumina type carrier containing an alkaline metal oxide, alkaline earth metal oxide or silica, on which is supported nickel, iron, cobalt, platinum, rhodium, ruthenium or palladium (see JP-A-50-126005 and 61-280554).

A catalyst of nickel, cobalt or ruthenium supported on a zirconia carrier is said to have also excellent characteristics as a catalyst of this type (see JP-A-43-12410; T. Igarashi et al.: "Steam Reforming Reaction of n-Butane on Rh/ZrO₂"; and the 58th Catalyst Symposium (A), 4B12, pp. 176-177).

There is also a more recent report, describing that zirconia supporting rhodium exhibits excellent performance in steam reforming of hydrocarbons (T. Ohtaka et al.: "n-Butane-Steam Reaction on Rh/ZrO₂ Catalyst added with a Third Component; 62nd Catalyst Symposium, 3B305, pp. 118-119 ).

Also, noble metal catalysts have been supported on a surface layer of catalyst carrier such as alumina, silica or zirconia (JP-A-53-78735 and JP-A-48-53980).

On the other hand, a steam reforming catalyst has been widely used industrially in the reforming of petroleum and petroleum distillates. JP-61-260554 proposed recently to use a fuel cell with a hydrocarbon as raw material instead of the socalled fuel gas containing hydrogen or hydrogen and carbon monoxide, by using a steam reforming catalyst within a fuel cell.

The conventional type of catalyst of alumina supporting nickel, cobalt or other metal can be successfully used for steam reforming of gaseous or light paraffin when the steam/carbon (carbon in raw material hydrocarbon) molar ratio is small, whereas it is inadequate because coking occurs when the raw material containing a large quantity of unsaturated hydrocarbon such as olefins or a raw material with relatively large molecular weight such as heavy hydrocarbon are used. When coking occurs, differential pressure of the catalyst bed increases and reaction efficiency is decreased, finally blocking the catalyst bed. For this reason, coking should be suppressed by increasing the steam/carbon ratio, but there is then the problem that excess steam is required for the reaction.

Also, the increase of differential pressure of catalyst bed raises the load of the system. If the catalyst bed is blocked, catalyst must be replaced or regenerated. this leads to temporary suspension of the reaction, and more complicated apparatus is needed if catalyst is to be replaced or regenerated without stopping the reaction. Above all, in the internal reforming type of fuel cell, the replacement or the regeneration of the catalyst is difficult and it is desirable to suppress the coking of the catalyst as much as possible.

It is naturally preferable that the reaction efficiency in steam reforming be high, and the efficiency of the cell itself is important for the practical application of fuel cell. Thus, high efficiency of steam reforming of the catalyst present in a fuel cell is very important.

It is therefore desirable to provide a steam reforming catalyst for hydrocarbons with excellent mechanical strength, which does not cause coking and has a longer catalyst life, and preferably which can be used in a fuel cell with high steam reforming efficiency and with no coking, so as to have effective utilization of the catalyst metal.

EP-A-0406896 (published on 9th January 1991) discloses a catalyst for reforming a hydrocarbon which can be rhodium or ruthenium deposited on a catalyst comprising zirconia stabilized with yttrium oxide which is deposited within pores in the carrier.

EP-A-0338709 (published on 18th October 1989) discloses catalyst for purifying automobile exhaust gas and comprising cerium oxide particles stabilized with zirconia optionally with yttria.

EP-A-0337037 (published on 20th September 1989) also discloses a zirconia-yttria carrier which can carry a rhodium or ruthenium catalyst which can be used for steam reforming.

These three applications have priorities at least partially prior to that of the present application but were published thereafter and so can be relevant to novelty but not inventive step of the present invention.

According to the invention we provide a steam reforming catalyst for hydrocarbons, which contains at least 0.01 wt% of a catalyst metal selected from rhodium, ruthenium, palladium, platinum, nickel, cobalt, iron and mixtures of these metals, said catalyst metal being supported only on the surface layer of a zirconia carrier containing 0.5 mol% to 20 mol% yttria and having a crystal structure primarily consisting of a tetragonal system or tetragonal and cubic systems, in which the tetragonal system accounts for 35% or more of the crystal composition of said zirconia carrier.

We also provide a method of manufacturing said steam reforming catalyst for hydrocarbons, characterized in that said zirconia carrier is impregnated with a solution obtained by dissolving a catalyst metal salt in at least one kind of organic solvent, thereby allowing said catalyst metal to be supported on the surface layer of said zirconia carrier.

It has been found that the catalyst of this invention has better steam reforming catalyst performance than the conventional type of steam reforming catalyst and is more suitable as a steam reforming catalyst for a fuel cell because the catalyst metal is supported on said zirconia carrier which contains yttria and has said crystal structure (tetragonal or tetragonal and cubic).

Tetragonal or cubic zirconia containing a small quantity of yttria is known as partially stabilized zirconia and has high oxygen ionic conductivity, and it is believed that this may be related to the activation of oxygen ions in water or to the effect in suppressing coking.

The catalyst has high reaction efficiency, good coking suppression effect and high hydrogen generation efficiency even when steam/carbon ratio is low. Because this catalyst is stable to alkaline metal salts, it is suitable as a catalyst for an internal reforming type of fuel cell to be incorporated in a cell and utilized near to alkali metal salt electrolyte.

The noble metal catalyst can be effectively utilized because it is supported only on a surface layer of zirconia carrier. Thereby higher selectivity of reforming reaction and better effective of supressing carbon formation can be obtained compared with a conventional type of reforming catalyst. Further, the noble metal catalyst can be effectively utilized, and a steam reforming catalyst for hydrocarbons with high mechanical strength can be obtained.

In the accompanying drawings:

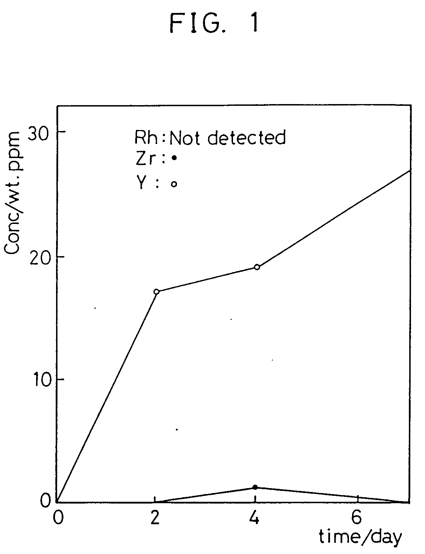

Fig. 1 is a diagram to show the rate of the component elution in the molten carbonate of a catalyst of this invention;

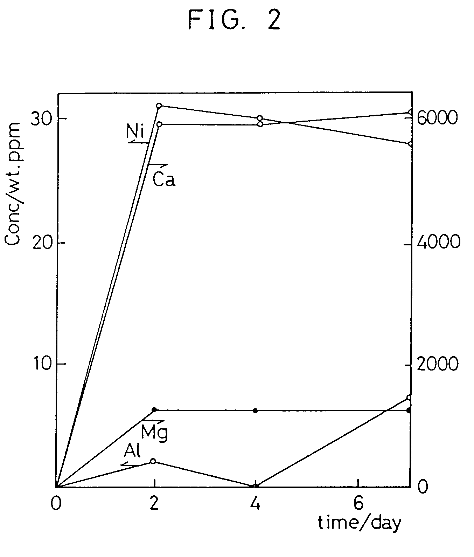

Fig. 2 is a diagram to show the rate of the component elution in the molten carbonate of a comparative catalyst;
Fig. 3 is a diagram to explain the measurement results by X-ray microanalyzer on the catalyst C of this invention; and
Fig. 4 is a diagram to explain the measurement results by X-ray microanalyzer on a comparative catalyst D.

The zirconia carrier can be manufactured by pressure molding after the mixture of yttrium compound and zirconium compound in the predetermined ratio are calcined. The mixture of yttrium compound and zirconium compound can be manufactured by the alkoxide hydrolytic method or thermal decomposition method using yttrium chloride (YCl₃) and zirconium oxychloride (ZrOCl₂) as raw materials, whereas the use of aqueous ammonia and neutralizing by coprecipitation is suitable for obtaining a mixture with uniform composition and good particle property. When the coprecipitation method is used, the deposited mixture is to be calcined after washing and drying.

The molar yttria content in the catalyst composition is 0.5 - 20 %, preferably, 1.0 - 10 %, or more preferably, 1.5 - 6 %. If the yttria content is higher than 20% the mechanical strength of catalyst is decreased; if the yttria content is lower than 0.5% the mechanical strength becomes insufficient for practical use as a catalyst.

The reasons for this are that a zirconia carrier containing yttria has primarily tetragonal crystal structure under the temperature condition for catalyst calcining and reforming reaction (about 600 - 1000°C) and that, if yttria content is lower than 0.5 mol%, the ratio of monoclinic system increases. If it exceeds 20 mol%, the ratio of the cubic system increases.

We have thus found that, if the proportion of monoclinic and cubic system increase in the crystal structure of zirconia carrier, the mechanical strength is decreased. In the temperature range for preparation of the catalyst or for the steam reforming reaction, it is necessary that at least 35% or more of the crystal structure consisting of cubic and tetragonal systems is the tetragonal system. In the zirconia carrier, the ratio of tetragonal system is preferably 98 - 35%, or more preferably, 90 - 50%; the more tetragonal system is present the higher the mechanical strength is increased.

The catalyst metal component is selected from rhodium, ruthenium, palladium and platinum; optionally a normal reforming catalyst component such as nickel, cobalt or iron may be used.

There is no restriction on the quantity, above 0.01 wt%, of catalyst metal supported on the zirconia-yttria carrier; it is preferably 0.01 - 10 wt% of the total weight of the carrier and metal, or more preferably 0.1 - 3 wt%. If the catalyst metal quantity is too high, it is not economical. On the other hand, if this quantity is too little, the catalyst activity is lowered, and the reforming of the hydrocarbons may be insufficient.

The zirconia carrier containing yttria used in the present invention is generally in cylindrical, ring or granular shape, but it is not necessarily limited to such shape. It may be fibrous or may be of 3-dimensional structure, or it may be used as a complex structure with another carrier. As an internal reforming catalyst, a granular carrier with small particle size is preferable.

The method of supporting the catalyst metal on the zirconia-yttria carrier can be performed in a usual manner, normally by impregnation into the carrier, provided that the catalyst metal is deposited only into a surface layer of the carrier.

For this purpose it is necessary to select a solvent having lower affinity to the catalyst metal component than to the carrier, adequately suppressing the affinity to the carrier; this requirement is attained by using a specific organic solvent which does not make catalyst metal penetrate into the carrier.

The solvents suitable for surface supporting of catalyst metal salt on zirconia carrier containing yttria are ketones such as acetone, methylethylketone or diethylketone, alcohols such as methanol or ethanol, acetic acid compounds such as acetic acid, methyl acetate or ethyl acetate, and ethers such as diethyl ether. Further, mixtures of the above organic solvents with another solvent such as water or a hydrocarbon may be used; water can constitute up to 50% in the mixed solvent. It is not desirable to use too much water because the catalyst metal component then would penetrate into the carrier.

Rhodium or ruthenium is the most desirable as the catalyst metal, e.g. used as the compound ruthenium chloride (RuCl₃ · 3H₂O) or ruthenium red (Ru₂(OH)₂Cl₄·7NH₃·3H₂O). These compounds are preferably dissolved in a solvent in amount of 0.05 - 5%, or more preferably 0.1 to 2%.

To adsorb the catalyst metal salt on a catalyst carrier using the metal salt solution thus prepared, the catalyst carrier should be placed and immersed in a solution of metal compound. The weight ratio of the quantity of the solution to the quantity of carrier is preferably 1:1 to 50:1 or more preferably 3:1 to 10:1. The immersion time is preferably 1 minute to 24 hours.

The concentration of metal salt in solution, the quantity of the solution and the immersion time each exert an influence on the adsorption process. By adequate selection of these factors, the metal can be adsorbed only on the surface layer, and this can be easily confirmed by an X-ray microanalyzer.

By immersing the catalyst carrier into a metal salt solution and drying it thereafter, the catalyst of this invention is obtained. It can be used for the reforming reaction after hydrogen reduction.

The steam reforming reaction of a hydrocarbon is given by the following reaction formulae:$\text{CmHn + MH₂O → mCO + (} \frac{\text{n}}{\text{2}} \text{+ m)H₂}$ $\text{CH₄ + H₂O → CO + 3H₂}$$\text{CO + H₂O → CO₂ + H₂}$
where m = about 1 to 20 and
n = about 4 - 42.

In general, the reaction temperature is 300 - 1000°C, while a temperature of 700°C or lower may be suitable because coking does not easily occur with the catalyst of this invention. The reaction pressure is about 0.01 - 50 kg/cm²G, or more preferably about 0.1 - 30 kg/cm²G, i.e. 0.01 - 49 and 0.1 - 29.5 Pa x 10⁵.

From the viewpoint of productivity, it is preferable that the steam/carbon mol ratio is low, while, to avoid the problem of coking, it is preferably 1.2 or more, or more preferably, 1.4 or more.

As raw materials to be used for the steam reforming reaction, there are, for example, gas containing light hydrocarbon such as LNG or LPG, a petroleum distillate such as naphtha or kerosene, or a hydrocarbon such as coalliquefied oil; in particular hydrocarbons with relatively lower molecular weight (C₁ to C₂₀) may be used. It is preferable that the raw material gas consists substantially of hydrocarbon only, i.e. other components are present in trace quantity. Thus sulfur compounds are present preferably in amount of 0.5 ppm or less when the raw material is naphtha. Kerosene normally contains about 50 ppm of sulfur compounds; if this is used as raw material, it is desirable to use it after sulfur is reduced to less than 0.5 ppm, which can be done by hydrodesulfurization.

Further, the specific gravity of a hydrocarbon used as raw material is preferably 0.80 or less, or more preferably, 0.75 or less. C/H weight ratio of such hydrocarbon is preferably 6.5 or less, or more preferably, 6.0 or less.

Because the catalyst of this invention has high reforming (conversion) efficiency and high effect to suppress coking, it can be used as a steam reforming catalyst for fuel cells using hydrocarbon as raw material. For example, in the molten carbonate type fuel cell, it has been pointed out that the activity is decreased because molten carbonate of electrolyte is scattered around and deposited on the catalyst surface.As it will be shown in the examples below, a catalyst of this invention is stable to carbonates, and it is particularly useful for use in an internal reforming type fuel cell. It is desirable to arrange the catalyst layer in the internal reforming type fuel cell on the anode side of the fuel gas passage of each cell or between stacked cells.

The following examples illustrate further the features of the invention.

### EXAMPLE 1

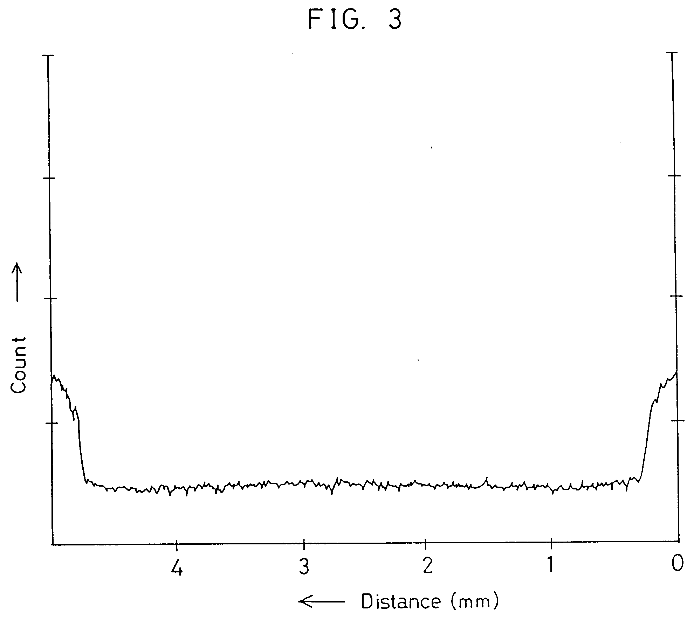

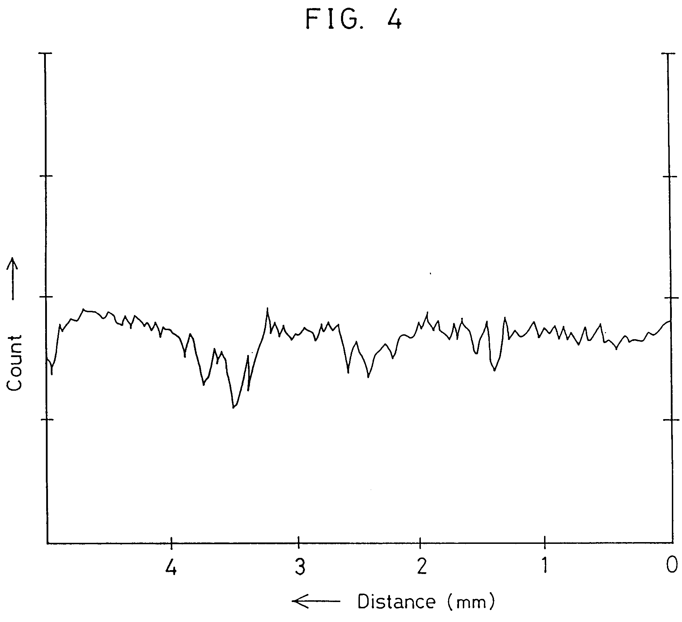

(1) To a solution of 0.13 g of ruthenium chloride (RuCl₃.3H₂O) dissolved in 50 ml of acetone, 25 g of pieces of a commercial tetragonal zirconia carrier containing 3 mol % yttria (5 mmφ x 3 mm) (Trade name TZ-3YB; Toso Co., Ltd.) was added, and the ruthenium compound was completely adsorbed thereon. After the solvent was removed, it was dried at 100°C for 3 hours, and a catalyst A of this invention was obtained. When this catalyst was analyzed by an X-ray micro-analyzer, 99% of the ruthenium was found to be supported on the portion 0.3 mm from the surface, as shown in Fig. 3.
(2) The procedure as in the above (1) was repeated, except that, instead of an acetone solution of ruthenium, a solution of 0.25 g of ruthenium chloride in 50 ml of water was used. When the resultant catalyst (B) was analyzed by an X-ray microanalyzer, ruthenium was found to be carried uniformly deep into the catalyst as shown in Fig. 4, and it was evidently different in metal distribution from the catalyst A of the present invention.
(3) Of the known commercial steam reforming catalysts for naphtha, a nickel catalyst with the highest anti-coking property was used as a comparative catalyst C. Its composition (wt %) was:

- Ni: 16.2
- Al₂O₃: 24.7
- MgO: 10.7
- CaO: 19.3
- K₂O: 6.7
- SiO₂: 19.0

The nickel was uniformly impregnated into the carrier.

Into three reaction tubes, 1.2 cc each of the above catalysts A, B and C was filled, and these were reduced in a hydrogen atmosphere at 788°C. Using desulfurized light naphtha (specific gravity 0.70; C/H weight ratio 5.52; sulfur component 50 ppb) as hydrocarbon material, reaction was performed at 650°C (at reaction tube outlet), and 0.2 kg/cm²G, steam/carbon (S/C) mol ratio of 1.5 and material supply spatial velocity (GHSV) of 8,000 h⁻¹. The results are given in the table below.

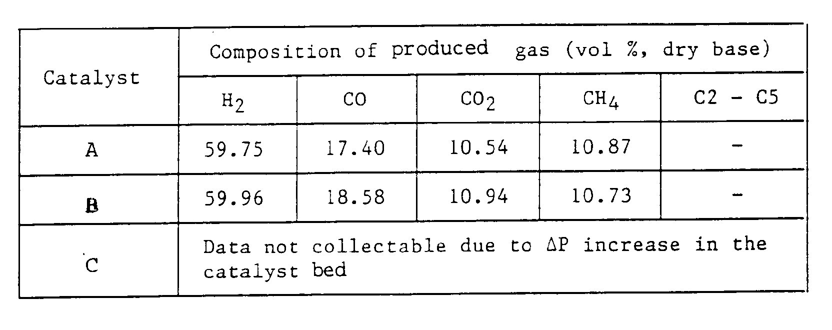

As is evident from this table, the catalyst A of this invention had the same reforming activity as that of the catalyst B in which the metal was uniformly distributed, and also exhibits better reactivity and anti-coking property (coking suppressive effect) than the conventional type, uniformly supported, nickel catalyst C.

### TEST EXAMPLE

The catalyst C of Example 1 was pulverized into pieces passing an 8 - 16 USS mesh. After immersing 5 g thereof in 70 g of molten alkali metal carbonate at 650°C (Li/K ratio = 62/38), the elution quantity of the catalyst components after 2, 4 and 7 days was measured.

It was thus found that zirconia was not eluted almost at all, and yttrium was slightly eluted, i.e. about 20 ppm on the 7th day, and ruthenium was not detected. This shows that the catalyst of this invention is stable to the molten carbonate.

### EXAMPLE 2

Zirconium hydroxide was processed by pressure molding into a cylindrical shape of diameter 5 mm and height 5 mm and was calcined for 3 hours at 1000°C. Then, ruthenium was supported on the surface of the resultant carrier in amount of 0.5 wt% by the same procedure as with the catalyst A of this invention in Example 1, and a catalyst D of the invention not containing yttrium was obtained.

Further, two hydroxide mixtures containing yttria in amounts respectively of 3 mol % and 8 mol %, obtained by coprecipitation from zirconium oxychloride (ZrOCl₂) and yttrium chloride (YCl₃), were molded and calcined by the same procedure as with the above catalyst D. By the same procedure as with the catalyst A of Example 1, 0.5 wt % of ruthenium was supported thereon, and the catalysts E and F were prepared.

The catalysts D, E and F were analyzed by X-ray diffraction analysis and each crystal phase was quantitatively analyzed by the Rietbelt method (Journal of the Japan Crystallography Association, Vol. 27, p. 23, 1985). The results were:

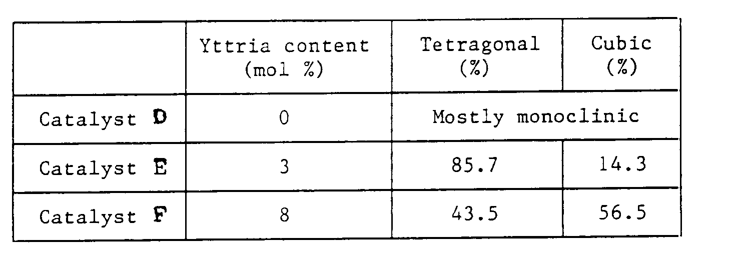

### Steam reforming reaction activity:

The catalysts E and F were filled into reaction tubes and reduction was performed. Then, an evaluation test by continous reaction was performed using as raw material a light naphtha (specific gravity 0.69; C/H weight ratio 5.38; sulfur component 60 ppb); reaction was performed using a steam/carbon (S/C) mol ratio of 3.0, a reaction temperature of 800°C (at reaction tube outlet), a reaction pressure of 4 kg/cm²G and a material supply spatial velocity (GHSV) of 2,500 h^{-1.}

The results of the test are given below:

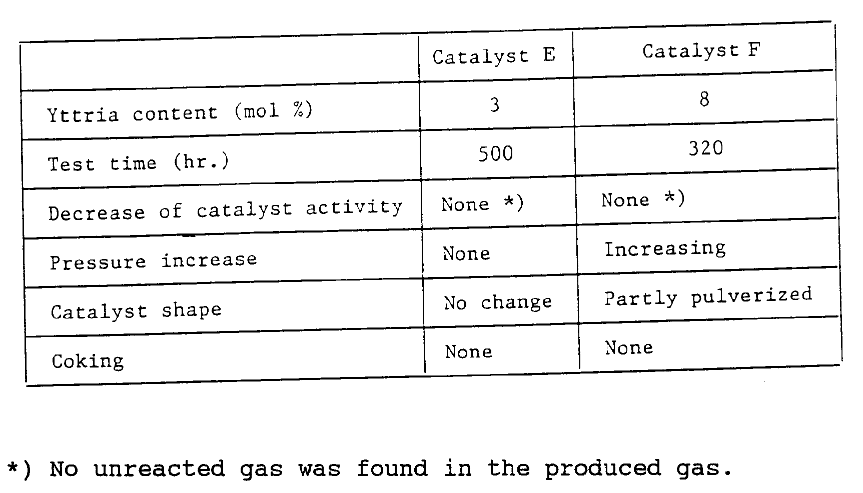

Because the pressure began to increase with the catalyst F, the test was terminated after 320 hours.

### EXAMPLE 3

By the same procedure as in the Example 2, zirconia carriers of 0 mol %, 3 mol % and 8 mol % yttria content, of a shape of 15 mm outer diameter, 6 mm inner diameter 9 mm height were prepared, and ruthenium was supported on each surface layer in amount of 0.5 wt %, as in Example 1.

The side crushing strength was measured on 20 samples of the three resultant types of catalysts using the Kiya type strength test. The average values obtained from test results were respectively 0.6, 3.1 and 1.5 kg/mm, for the respective yttria contents of 0, 3 and 8 mol%.

## Claims

1. A steam reforming catalyst for hydrocarbons, which contains at least 0.01 wt% of a catalyst metal selected from rhodium, ruthenium, palladium, platinum, nickel, cobalt or iron and mixtures of these metals, said catalyst metal being supported only on the surface layer of a zirconia carrier containing 0.5 mol% to 20 mol% yttria and having a crystal structure primarily consisting of a tetragonal system or tetragonal and cubic systems, in which the tetragonal system accounts for 35% or more of the crystal composition of said zirconia carrier.

2. A steam reforming catalyst according to Claim 1, which is provided in a fuel cell to produce a cell fuel by reforming a hydrocarbon.

3. A method of manufacturing a steam reforming catalyst for hydrocarbons, as claimed in Claim 1, characterized in that said zirconia carrier is impregnated with a solution obtained by dissolving a salt of said catalyst metal in at least one kind of organic solvent, thereby allowing said catalyst metal to be supported on the surface layer of said zirconia carrier.

4. A method according to Claim 3, wherein said organic solvent is a ketone, an alcohol, a fatty acid ester or an ether.

## Patentansprüche

1. Dampfreformier-Katalysator für Kohlenwasserstoffe, welcher wenigstens 0,01 Gew.-% eines Katalysatormetalls gewählt aus Rhodium, Ruthenium, Palladium, Platin, Nickel, Kobalt oder Eisen und Mischungen dieser Metalle enthält, wobei das Katalysatormetall nur auf der Oberflächenschicht eines Zirkoniumdioxidträgers gehalten ist, der 0,5 Mol-% bis 20 Mol-% Yttriumdioxid enthält und eine Kristallstruktur besitzt, die in erster Linie aus einem tetragonalen System oder tetragonalen und kubischen Systemen, in welchen das tetragonale System 35% oder mehr der Kristallverbindung des Zirkoniumdioxidträgers beträgt, besteht.

2. Dampfreformier-Katalysator nach Anspruch 1, welcher in einer Kraftstoffzelle angeordnet ist, um durch Reformieren eines Kohlenwasserstoffes einen Zellkraftstoff herzustellen.

3. Verfahren zur Herstellung eines Dampfreformier-Katalysators für Kohlenwasserstoffe nach Anspruch 1, dadurch gekennzeichnet, daß der Zirkoniumdioxidträger mit einer Lösung imprägniert wird, die durch Auflösen eines Salzes des Katalysatormetalles in wenigstens einer Art eines organischen Lösungsmittels erhalten wird, die es erlaubt, daß das Katalysatormetall auf der Oberflächenschicht des Zirkoniumdioxidträgers gehalten wird.

4. Verfahren nach Anspruch 3, worin das organische Lösungsmittel ein Keton, ein Alkohol, ein Fettsäureester oder ein Äther ist.

## Revendications

1. Catalyseur de reformage à la vapeur pour hydrocarbures, qui contient au moins 0,01% en poids d'un métal catalyseur choisi parmi le rhodium, le ruthénium, le palladium, le platine, le nickel, le cobalt ou le fer, et des mélanges de ces métaux, ce métal catalyseur étant supporté seulement sur la couche surfacique d'un support à base de zircone contenant 0,5 mole % à 20 moles % d'yttria et ayant une structure cristalline constituée principalement d'un système quadratique ou de systèmes quadratique et cubique, dans lesquels le système quadratique constitue 35% ou davantage de la composition cristalline de ce support à base de zircone.

2. Catalyseur de reformage à la vapeur selon la revendication 1, qui est prévu dans une pile à combustible pour produire un combustible de pile par reformage d'un hydrocarbure.

3. Procédé de préparation d'un catalyseur de reformage à la vapeur pour hydrocarbures, selon la revendication 1, caractérisé en ce que le support à base de zircone est imprégné avec une solution obtenue en dissolvant un sel de ce métal catalyseur dans au moins un type de solvant organique, permettant ainsi au métal catalyseur d'être supporté sur la couche surfacique de ce support à base de zircone.

4. Procédé selon la revendication 3, dans lequel le solvant organique est une cétone, un alcool, un ester d'acides gras ou un éther.
